# EUROPEAN PATENT SPECIFICATION

(11) **EP 4 014 330 B1**
(45) Date of publication and mention of the grant of the patent: **11.02.2026**
(21) Application number: 20753716.8
(22) Date of filing: 05.08.2020
(51) Int. Cl.: H04B 5/00, E04H 13/00, G06F 16/955

(54) **A DEVICE FOR PROVIDING INFORMATION ASSOCIATED WITH A PHYSICAL STRUCTURE TO ONE OR MORE USER DEVICES BASED AT THE SITE OF THE PHYSICAL STRUCTURE**
VORRICHTUNG ZUR BEREITSTELLUNG VON EINER PHYSISCHEN STRUKTUR ZUGEORDNETEN INFORMATIONEN AN EINE ODER MEHRERE BENUTZERGERÄTE BASIEREND AUF DER STELLE DER PHYSIKALISCHEN STRUKTUR
DISPOSITIF SERVANT À FOURNIR DES INFORMATIONS ASSOCIÉES À UNE STRUCTURE PHYSIQUE À UN OU PLUSIEURS DISPOSITIFS UTILISATEURS BASÉS SUR LE SITE DE LA STRUCTURE PHYSIQUE

(30) Priority: 12.08.2019 GB 201911529
(43) Date of publication of application: 22.06.2022
(73) Proprietor: 4D Concepts Limited, London NW3 2XY (GB)
(72) Inventor: CAMERON, Stephen Alexander, London NW3 2XY (GB)
(74) Representative: Marks & Clerk LLP
(86) International application number: PCT/EP2020/072056
(87) International publication number: WO 2021/028293

(56) References cited:
- EP-A1- 3 407 461
- CN-U- 201 843 386
- US-B1- 9 350 425

## Description

### FIELD

Embodiments described herein relate to a device for providing information associated with a physical structure to one or more user devices based at the site of the physical structure. In particular, embodiments relate to a device for providing information associated with a monument to one or more user devices.

### BACKGROUND

Devices for storing and delivering information to people visiting monuments are known in the art. An example of such a device is described in US7395960. In that document, a memory device is affixed to a monument at a remote location, such as a tombstone in a cemetery, for example. The memory device comprises a contact memory device that stores information relating to the monument and/or its location. The contact memory device can be read through active or passive contact with a reading device carried by a user, thereby allowing the user to access the stored information.

A problem with using such contact memory devices is that the user must be in very close proximity to the contact memory device in order to access the desired information. Moreover, it is only possible for a single user to read the contact memory device at a time, meaning that access to the stored information is limited to one person at a time.

It is desirable to provide a device that addresses the above problems.

CN201843386U proposes a digital tombstone, which is used for displaying various information such as the lifetime, the picture and the like of a dead and replacing the conventional cemetery and the stone tombstone in a memorial park. The digital tombstone comprises a tombstone body, wherein an electronic storage module with the wireless communication function is placed inside the top of the tombstone body and is covered by a waterproof solar panel; the waterproof solar panel is connected with the electronic storage module; a key matched with the electronic storage module is also included; and a key slot is formed on the front side of the tombstone body.

US9350425B1 proposes a memorial data system for providing information regarding an individual. The memorial data system comprises a marker for identifying the individual. A transponder circuit is coupled to the marker. A data is stored within the transponder circuit. A mobile electrical device transmits an electromagnetic field in close proximity to the transponder circuit. The transponder circuit receives the electromagnetic field for powering the transponder circuit. The transponder circuit transmits the data to the mobile electronic device. The mobile electronic device utilizes the data to access an electronic file on a network. The electronic file includes information regarding the individual.

EP3407461A1 proposes a beacon and/or sensor device having a primary and secondary power source that uses the second power source in case of a requirement to carry out additional tasks such as advanced functions. The secondary power source of the beacon or sensor device is capable of being wirelessly charged by a wireless charging transmitter when brought in close proximity and/or contact to the beacon and/or sensor device. Thus, the primary power source is not used and drained while performing advanced functions.

### SUMMARY

According to the present invention, there is provided a system as set out in claim 1.

In some embodiments, the wireless signal for establishing the wireless communication channel comprises a beacon signal, the beacon signal providing data to be used by the one or more user devices in connecting to the device.

In some embodiments, the device is configured to transmit the information associated with the physical structure in the form of a page of content viewable on the one or more user devices. In some embodiments, the content page comprises a link to one or more other pages of content available to be transmitted from the device to the one or more user devices.

In some embodiments, the device comprises of a memory for storing the information associated with the physical structure. In some embodiments, the information pertains to the site at which the physical structure is located.

In some embodiments, the wireless power receiver is configured to receive power from the external source by inductive coupling with the external source.

In some embodiments, the wireless communication channel comprises a WiFi channel.

In some embodiments, the device is configured to receive additional information from the one or more user devices via the wireless communication channel and to store the additional information in memory.

In some embodiments, the device is sealed in a casing.

In some embodiments, the communication channel is such as to allow two-way communication between the device and the one or more user devices.

In some embodiments, the physical structure comprises a monument. In some embodiments, the monument is commemorative of a person or event, and the information associated with the monument concerns the person or event being commemorated. In some embodiments, the monument is a gravestone.

### BRIEF DESCRIPTION OF DRAWINGS

Embodiments of the invention will now be described by way of example with reference to the accompanying drawings in which:
Figure 1 shows an example of a device according to an embodiment;
Figure 2 shows a schematic of a device according to an embodiment;
Figure 3 shows a schematic of a device according to a further embodiment;
Figure 4 shows a schematic of a device according to a further embodiment;
Figure 5 shows an example of how a device may be embedded into a gravestone according to an embodiment;
Figure 6 shows a flow-chart of steps used in accessing information stored in a device according to an embodiment.

### DETAILED DESCRIPTION

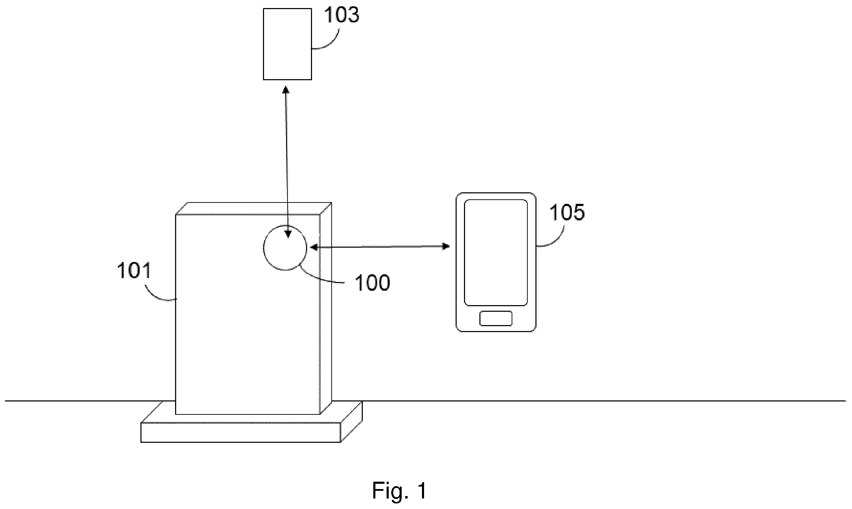

Figure 1 shows an example of a device 100 according to an embodiment. In this embodiment, the device is embedded in a physical structure 101. The physical structure may be any fixed structure including, for example, a monument, a statue, a memorial, a museum display, or a commemorative plaque on a wall. The device 100 provides a means for preserving information about the structure and/or its location over long periods of time.

The device 100 is configured to receive power wirelessly from an external source 103 without requiring physical contact between electrical terminals or contacts. In the present embodiment, the external source 103 is a wireless charging device, but other forms of power supply may be used that do not require physical contact between the device 103 and the device 100. As an example, the device 100 may comprise one or more photovoltaic cells that receive power from a light or infra-red emitter provided on the external device 103. The use of the external device 103 obviates the need for mains power connection for the device 100, which may not be available at the site at which the physical structure is located.

Once powered by the external device 103, the device 100 is able to establish a wireless communication channel between the device 100 and a user device 105, thereby to communicate information associated with the physical structure to the user device. (The term "wireless communication" as used herein can be understood to refer to communication via electromagnetic waves, without the need for a physical contact between the transmitter and receiver). The device 100 may communicate with the user device 105 in one or more wavelength bands across the electromagnetic spectrum. For example, the wireless communication channel may be located in any one of the radio wave, infrared, optical, and ultraviolet portions of the electromagnetic spectrum.

The user device 105 can be any electronic device capable of receiving information sent wirelessly and presenting that information to a user. For example, the user device 105 may be able to communicate via a WiFi channel, Bluetooth channel, Infrared, LiFi, and the like. By way of example, the user device 105 may be a mobile phone, smartphone, smartwatch, tablet, laptop, personal digital assistant (PDA), and the like.

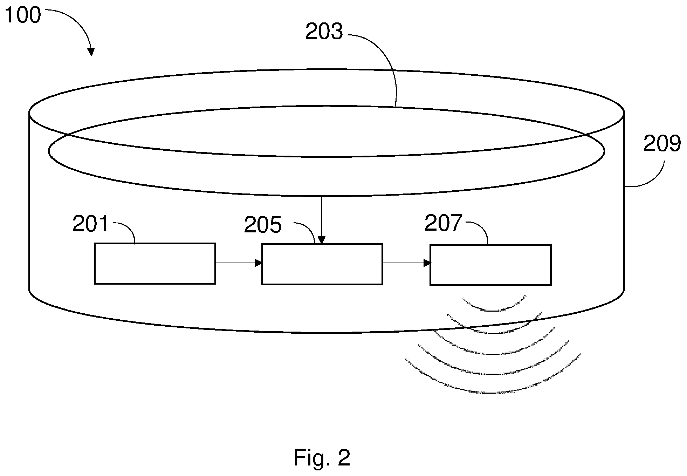

Figure 2 shows the device 100 of Figure 1 in more detail. In the present embodiment, the device includes a memory 201 in which is stored information relating to the structure and/or site in which the structure is located. Where the device 100 is embedded within a gravestone, the data stored on the device can include a eulogy of the deceased person or their biography, for example. Information stored in the memory of the device can also include videos, pictures, sound recordings and literary works from the deceased. In other examples, where the device is affixed to or embedded in a plaque on a historical building or statue, the information can relate to the historical significance of that structure.

The device further includes a wireless power receiver 203, configured to receive power from the external device 103. In the present embodiment, the wireless power receiver 203 comprises an induction coil, which is configured to receive power wirelessly from the external device 103 through electromagnetic induction. The wireless power receiver 203 is connected to processing electronics 205, which may comprise one or more microprocessors. The processing electronics are also connected to the memory 201 and a wireless transmitter 207 that is used to transmit information stored in the memory wirelessly to the user device. The transmitter 207 may also function as a receiver for receiving wireless signals sent from the user device. In addition to controlling the delivery of power from the wireless power receiver 203 to the transmitter 207, the processing electronics 205 process the outgoing and incoming signals from the wireless transmitter, and retrieve the required files from the memory 201 for transmission to the user device.

In some embodiments, the device may include an energy storage system for temporarily storing energy obtained from the wireless power receiver. Once powered by the external device 103, the wireless power receiver 203 can charge the energy storage system, which will in turn supply power to the wireless transmitter, allowing the device to function in the event the external device 103 is removed. The energy storage system may take the form of one or more capacitors arranged to charge when energy is supplied wirelessly to the wireless power receiver, thereby storing the supplied energy in an electrical field. The capacitor(s) may in turn then supply power to the wireless transmitter by discharging.

It will be appreciated that the use of the wireless power receiver (either with or without the one or more capacitors) can obviate the need for any internal battery for the device, particularly batteries that store energy in chemical form and which may be prone to leakage, as well as requiring periodic maintenance, and ultimately replacement. Thus, in some embodiments, the device may not include an internal battery.

The components of the device are contained within a hermetically sealed casing 209, which is durable and resistant to damage from the weather. The casing 209 is transparent to electromagnetic waves used in transmitting and receiving information to and from the device. The hermetically sealed casing 209 may consist of an air-tight sleeve which is vacuum sealed and electrically insulating. The device and its sleeve can be immersed in an epoxy resin, polymer or silicon liquid, which is cured to set hard and become immune to weathering. The casing may be waterproof, for example. The device 100 being hermetically sealed allows for the information stored on the memory 201 to be preserved; for example, the casing can help prevent the internal components from rusting and/or being damaged over time and thus rendered unusable.

The device 100 is used to provide information about the monument and/or the site on which it is located to a person visiting the site. In use, a visitor to the site approaches the monument with an external source of power 103 such as a wireless charging power-bank, and a user device 105 such as a mobile phone, on which they can receive information transmitted from the device 100. The user supplies power to the device 100 by placing the wireless charging power-bank in proximity to the device, with the power-bank powering the device by means of electromagnetic induction. On receiving power, the wireless power receiver supplies power to the wireless transmitter, allowing it to establish a wireless communication channel between the device 100 and the user device 105. The device 100 can, in effect, act as a wireless hub, broadcasting wireless signals that allow user devices to connect to the device at the same time and access information stored thereon. By doing so, the device 100 may create a local wireless network in which multiple users can connect to the device and retrieve information stored in its memory.

In some embodiments, once powered by the external device 103, the wireless transmitter may transmit one or more wireless beacon signals containing information about the device 100 and any necessary parameter settings that the user device(s) must employ in order to begin to receive and/or transmit data to the device 100. The user device(s) detect the beacon signal(s) and transmits a message to the device 100 requesting to connect to the network. Once the communication channel is established between the device 100 and the user device 105, the user is able to send requests for information about the site to the device.

In some embodiments, the user is able to view content received from the device 100 in a browser installed on the user device 105. On establishing a connection between the device 100 and the user device 105, the browser may display a home page transmitted by the device 100, providing an introduction to the site and a list of contents available for retrieval on the user's device. The list of contents may be displayed in the form of one or more web links, which when selected by the user, send a request to the device 100 to retrieve and send content contained in other files in the memory to the user device 105. In this way, the user is able to browse information stored in the memory of the device 100 on their personal user device 105.

The information stored in memory on the device 100 can be stored in a wide range of formats. The information may be stored in either an encrypted format or unencrypted format, and similarly may be either compressed or non-compressed. The information stored in memory may include video files, image files, text files and web page files. The web page files can be stored in a range of markup languages and/ or hypertext and/or hyperlinks to be displayed on a plurality of web browsers; this may include versions of Hypertext Markup Languages (HTML), Extensible Hypertext Markup Languages (XHTML), and the like.

In some embodiments, the data stored in each file location in the memory of the device 100 may be identified by a distinct Uniform Resource Identifier (URI) to allow access for a user device to access the information from the memory 201 by the web browser. It will be apparent that a Uniform Resource Locator (URL) can be used as the URI.

In the case where the user obtains access to the information stored on the device 100 through a web browser, the wireless communication channel may comprise a Hypertext Transfer Protocol (HTTP) connection. Encrypted communications between the user device and the device 100 may be established using the HTTP Secure (HTTPS) protocol or Secure Shell (SSH) cryptographic network protocol.

It will be appreciated that once the device 100 has been activated and commenced transmitting wireless signals, multiple users may connect to the device via their respective user devices and issue requests to retrieve information stored within the memory of the device 100. Accordingly, the retrieval of information from the device 100 is not limited to a single device at any one time, and users are able to browse a variety of content pages at their own choosing by selecting different addresses within their browsers.

In some embodiments, the device 100 may be configured to establish an internet connection via an external network, such as a cellular network. The connection between the device 100 and the internet can be made via plurality of Internet protocols such as User Datagram Protocols (UDP), Dynamic Host Configuration Protocol (DCHP), allocated IP or fixed IP. In this way, the device 100 can act as an access point to a larger network and retrieve information for sending to the user from a remote server, rather than only transmitting information that is stored locally on the device 100.

The range of communication between each user device and the device 100 will depend on the frequency of the transmitted electromagnetic waves and the communication protocol. The communication band may be selected so as to allow users with their devices to roam near the vicinity of the monument, without the need for the user(s) to remain in close proximity to the structure.

The wireless communication channel that is established between the device 100 and each user device may be either personal or private. Information sent between the device 100 and each user device may be encrypted (for example, end-to-end encrypted) or unencrypted. In the case of end-to-end encryption, only the device 100 and the user device 105 may be able to decrypt communications sent between those two devices.

It will be appreciated that the data stored on the memory 201 can be modified by the user device 105. In some embodiments, a user, on connecting to the device 100, may upload or transfer additional data and/or comments to the memory, which can then be accessed by subsequent visitors to the site. By way of example, in the case of the device being embedded within a gravestone, the device 100 may contain images of the deceased and over time, new images that have been found may be added by family and friends who wish to maintain a permanent store of these new images. In another example, visitors to the site may use the device 100 to function as a guestbook, adding comments or recommendations that can then be viewed by others who subsequent connect to the device 100.

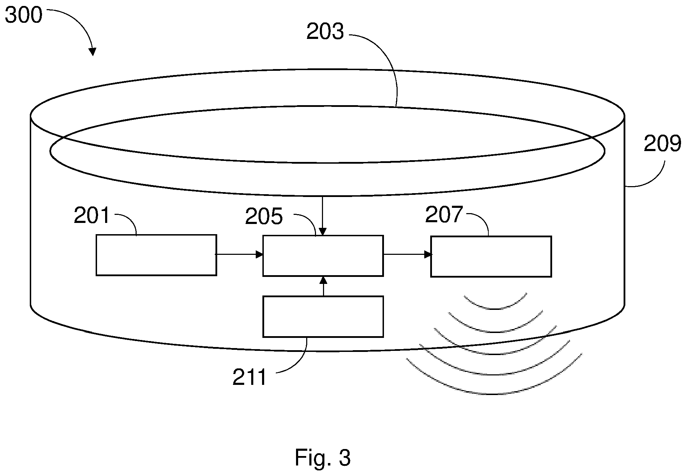

The device 100 is configured to function in one of two modes. In the first mode, the device 100 does not connect to an external network, but simply facilitates wireless connections between itself and one or more user devices, such that those user devices may then request and retrieve information stored locally in the memory of the device 100. In the second mode, the device connects to the external network, facilitating connection between the user devices and that external network. Precisely which of these two modes the device will operate in may be determined by its orientation. Figure 3 shows an example embodiment of the device 300 in which the device comprises an orientation sensor 211 (components that have the same function as in Figure 2 are numbered the same in Figure 3). The orientation sensor 211 may comprise of a gyroscope or a mercury switch. The orientation sensor 211 is used to determine the orientation of the device 300 with respect to a particular plane and in turn can be used to configure the mode of the device 300.

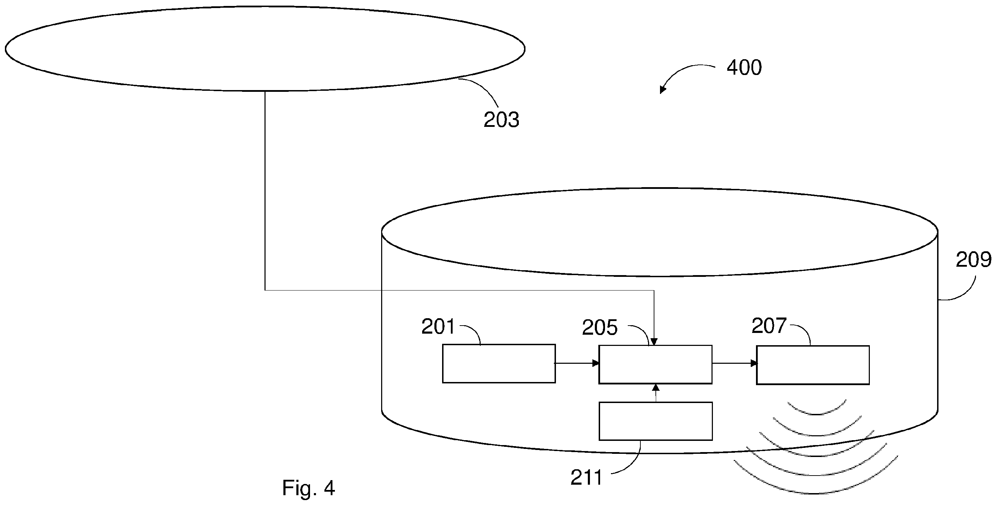

Figure 4 shows another embodiment of a device 400 that may be embedded in the gravestone 101 as shown in Figure 1. In Figure 4, components that have the same functionality as that shown in Figure 2 and 3 are labelled with the same reference numerals. It can be seen that the device 400 is similar to that shown in Figures 2 and 3, but in this case, the induction coil 203 is not enclosed in the sealed durable casing 209 but is still connected to the processing electronics 205 and can distribute power to the components in the sealed durable casing 207. In this embodiment, the induction coil can be placed in a different location from the other components of the device 400. The induction coil can therefore be placed in a part of the fixed structure which is more convenient in terms of allowing the user to access the coil with the external device 103. For example, the user may use a portable power bank to act as a wireless charger for supplying power to the device 400, and the induction coil may be located at a point in the physical structure that allows the user to rest the power bank on the physical structure.

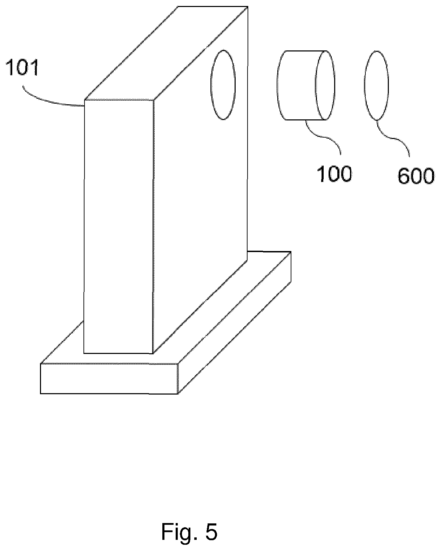

Figure 5 shows an example of how the device 100 of Figure 1 can be embedded within the gravestone 101. The device may be fully embedded within the gravestone. A hole is cut into the gravestone and the device 100 placed inside. The hole is then sealed. The seal 600 can be made to be inconspicuous, or can be provided with a marker to indicate the presence of the device and/or where to position the external device 103 used to supply power to the device 100. In other embodiments where the power receiver is not enclosed within the durable casing, a different hole can be cut to allow the power receiver and the encased device to be embedded. The seal can either be designed to indicate the presence of the device and the position at which the external device 103 should be placed in order to power the device 101, or the seal can be made to look inconspicuous such that it does not detract from the overall aesthetic of the structure.

It will be appreciated that the device may be embedded in the structure during the manufacture or building of the structure.

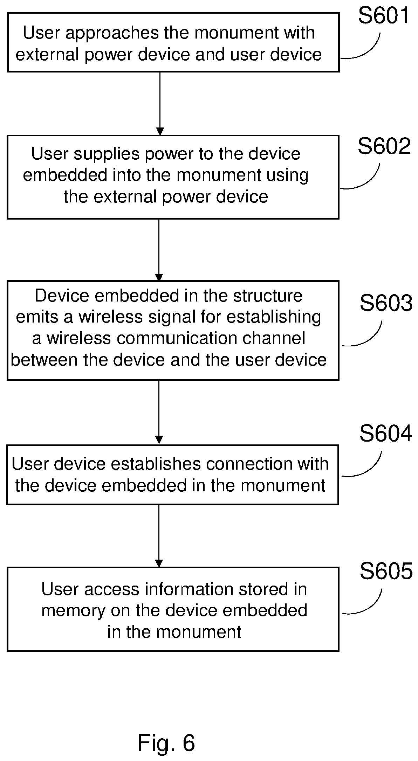

Figure 6 shows an example flow chart of how the device of Figure 1 can be used. In step S601, the user approaches the monument with their user device and external power device for supplying power to the device embedded in the monument. The user may carry a wireless charging power-bank, for example. In step S602, the user provides power to the device embedded in the monument by means of electromagnetic induction from the power-bank. Once power has been transferred to the device 100, the device 100 emits a wireless signal for establishing a communication channel between itself and the user device (step S603). The user device uses the signal to establish a connection with the device embedded in the monument (step S604). In step S605, the user is able to access the data stored in memory of the device via the wireless communication channel.

## Claims

1. A system comprising:
a physical structure (101) located at a site; and
a device (100, 300, 400) configured to provide information associated with the physical structure (101) to one or more user devices (105) located in the vicinity of the physical structure, the device (100, 300, 400) being embedded and hermetically sealed within the physical structure, the device comprising:
a wireless transmitter (207); and
a wireless power receiver (203) configured to receive power wirelessly from an external source of power (103) and to deliver power to the wireless transmitter (207);
wherein upon delivery of power from the wireless power receiver (203) to the wireless transmitter (207), the transmitter is configured to transmit a wireless signal for establishing a wireless communication channel between the device (100, 300, 400) and the one or more user devices (105), thereby to communicate information associated with the physical structure (101) to the one or more user devices (105);
wherein the device (100, 300, 400) is configured to operate in two modes; wherein, in the first mode, the device (100, 300, 400) is configured to retrieve the information from memory (201) stored within the device (100, 300, 400), and in the second mode, the device (100, 300, 400) is configured to act as an access point to an external network, the device being configured to retrieve the information from a server over the external network;
wherein the choice of which mode the device (100, 300, 400) operates in is determined by the orientation of the device (100, 300, 400).

2. A system according to claim 1, wherein the device (100, 300, 400) is configured to act as a wireless hub for allowing multiple user devices to connect to the device (100, 300, 400) and obtain the information associated with the physical structure (101).

3. A system according to claim 1 or 2, wherein the wireless signal for establishing the wireless communication channel comprises a beacon signal, the beacon signal providing data to be used by the one or more user devices (105) in connecting to the device (100, 300, 400).

4. A system according to any one of the preceding claims, wherein the device (100, 300, 400) is configured to transmit the information associated with the physical structure (101) in the form of a page of content viewable on the one or more user devices.

5. A system according to claim 4, wherein the content page comprises a link to one or more other pages of content available to be transmitted from the device (100, 300, 400) to the one or more user devices (105).

6. A system according to any one of the preceding claims, comprising a memory (201) for storing the information associated with the physical structure (101)

7. A system according to any one of the preceding claims, wherein the information pertains to the site at which the physical structure is located.

8. A system according to any one of the preceding claims, wherein the wireless power receiver (203) is configured to receive power from the external source (103) by inductive coupling with the external source (103)

9. A system according to any one of the preceding claims, wherein the wireless communication channel comprises a WiFi channel.

10. A system according to any one of the preceding claims, wherein the device (100, 300, 400) is configured to receive additional information from the one or more user devices (105) via the wireless communication channel and to store the additional information in memory.

11. A system according to any one of the preceding claims, wherein the device (100, 300, 400) is sealed in a casing (209).

12. A system according to any one of the preceding claims, wherein the communication channel is such as to allow two-way communication between the device (100, 300, 400) and the one or more user devices (105).

13. A system according to any one of the preceding claims, wherein the physical structure (101) comprises a monument.

14. A system according to claim 13, wherein the monument (101) is commemorative of a person or event, and the information associated with the monument concerns the person or event being commemorated.

15. A system according to claim 14, wherein the monument (101) is a gravestone.

## Patentansprüche

1. System, umfassend:
eine physische Struktur (101), die sich an einem Standort befindet; und
eine Vorrichtung (100, 300, 400), die konfiguriert ist, um einer oder mehreren Benutzervorrichtungen (105), die sich in der Nähe der physischen Struktur befinden, der physischen Struktur (101) zugeordnete Informationen bereitzustellen, wobei die Vorrichtung (100, 300, 400) in die physische Struktur eingebettet und hermetisch abgedichtet ist, wobei die Vorrichtung umfasst:
einen drahtlosen Sender (207); und
einen drahtlosen Leistungsempfänger (203), der konfiguriert ist, um drahtlos Leistung von einer externen Leistungsquelle (103) zu empfangen, und Leistung an den drahtlosen Sender (207) abzugeben;
wobei der Sender konfiguriert ist, um bei Leistungsabgabe vom drahtlosen Leistungsempfänger (203) an den drahtlosen Sender (207) ein drahtloses Signal zum Aufbauen eines drahtlosen Kommunikationskanals zwischen der Vorrichtung (100, 300, 400) und der einen oder mehreren Benutzervorrichtungen (105) zu wenden, um dadurch Informationen, die der physischen Struktur (101) zugeordnet sind, einer oder mehreren Benutzervorrichtungen (105) zu kommunizieren;
wobei die Vorrichtung (100, 300, 400) konfiguriert ist, um in zwei Modi betrieben zu werden; wobei die Vorrichtung (100, 300, 400) im ersten Modus konfiguriert ist, um die Informationen aus dem in der Vorrichtung (100, 300, 400) gespeicherten Speicher (201) abzurufen, und im zweiten Modus konfiguriert ist, um als Zugangspunkt zu einem externen Netzwerk zu fungieren, wobei die Vorrichtung konfiguriert ist, um die Informationen von einem Server über das externe Netzwerk abzurufen;
wobei die Wahl, in welchem Modus die Vorrichtung (100, 300, 400) betrieben wird, durch die Ausrichtung der Vorrichtung (100, 300, 400) bestimmt wird.

2. System nach Anspruch 1, wobei die Vorrichtung (100, 300, 400) konfiguriert ist, um als drahtloser Hub zu fungieren, um es mehreren Benutzervorrichtungen zu ermöglichen, sich mit der Vorrichtung (100, 300, 400) zu verbinden und die der physischen Struktur (101) zugeordneten Informationen zu erhalten.

3. System nach Anspruch 1 oder 2, wobei das drahtlose Signal zum Aufbau des drahtlosen Kommunikationskanals ein Beacon-Signal umfasst, wobei das Beacon-Signal Daten bereitstellt, um von einer oder mehreren Benutzervorrichtungen (105) beim Verbinden mit der Vorrichtung (100, 300, 400) verwendet zu werden.

4. System nach einem der vorstehenden Ansprüche, wobei die Vorrichtung (100, 300, 400) konfiguriert ist, um die der physischen Struktur (101) zugeordneten Informationen in Form einer Inhaltsseite zu senden, die auf einer oder mehreren Benutzervorrichtungen einsehbar sind.

5. System nach Anspruch 4, wobei die Inhaltsseite einen Link zu einer oder mehreren anderen Inhaltsseiten umfasst, die von der Vorrichtung (100, 300, 400) an eine oder mehrere Benutzervorrichtungen (105) zu senden sind.

6. System nach einem der vorstehenden Ansprüche, umfassend einen Speicher (201) zum Speichern der Informationen, die der physischen Struktur (101) zugeordnet sind

7. System nach einem der vorstehenden Ansprüche, wobei sich die Informationen auf den Standort beziehen, an dem sich die physische Struktur befindet.

8. System nach einem der vorstehenden Ansprüche, wobei der drahtlose Leistungsempfänger (203) konfiguriert ist, um Leistung von der externen Quelle (103) durch induktive Kopplung mit der externen Quelle (103) zu empfangen.

9. System nach einem der vorstehenden Ansprüche, wobei der drahtlose Kommunikationskanal einen WiFi-Kanal umfasst.

10. System nach einem der vorstehenden Ansprüche, wobei die Vorrichtung (100, 300, 400) konfiguriert ist, um zusätzliche Informationen von der einen oder mehreren Benutzervorrichtungen (105) über den drahtlosen Kommunikationskanal zu empfangen und um die zusätzlichen Informationen in einem Speicher zu speichern.

11. System nach einem der vorstehenden Ansprüche, wobei die Vorrichtung (100, 300, 400) in einem Gehäuse (209) versiegelt ist.

12. System nach einem der vorstehenden Ansprüche, wobei der Kommunikationskanal beschaffen ist, um eine Zweiwegkommunikation zwischen der Vorrichtung (100, 300, 400) und der einen oder mehreren Benutzervorrichtungen (105) zu ermöglichen.

13. System nach einem der vorstehenden Ansprüche, wobei die physische Struktur (101) ein Monument umfasst.

14. System nach Anspruch 13, wobei das Monument (101) an einer Person oder einem Ereignis gedenkt und die dem Monument zugeordneten Informationen die Person oder das Ereignis betreffen, denen gedacht wird.

15. System nach Anspruch 14, wobei das Monument (101) ein Grabstein ist.

## Revendications

1. Système comprenant :
une structure physique (101) située au niveau d'un site ; et
un dispositif (100, 300, 400) configuré pour fournir des informations associées à la structure physique (101) à un ou plusieurs dispositifs utilisateurs (105) situés à proximité de la structure physique, le dispositif (100, 300, 400) étant intégré et scellé hermétiquement à l'intérieur de la structure physique, le dispositif comprenant :
un émetteur sans fil (207) ; et
un récepteur d'énergie sans fil (203) configuré pour recevoir de l'énergie sans fil à partir d'une source d'énergie externe (103) et pour fournir de l'énergie à l'émetteur sans fil (207) ;
dans lequel, lors de la fourniture d'énergie du récepteur d'énergie sans fil (203) à l'émetteur sans fil (207), l'émetteur est configuré pour transmettre un signal sans fil afin d'établir un canal de communication sans fil entre le dispositif (100, 300, 400) et les un ou plusieurs dispositifs utilisateurs (105), afin de communiquer des informations associées à la structure physique (101) aux un ou plusieurs dispositifs utilisateurs (105) ;
dans lequel le dispositif (100, 300, 400) est configuré pour fonctionner dans deux modes ; dans lequel, dans le premier mode, le dispositif (100, 300, 400) est configuré pour récupérer les informations de la mémoire (201) stockées dans le dispositif (100, 300, 400) et, dans le second mode, le dispositif (100, 300, 400) est configuré pour agir comme un point d'accès à un réseau externe, le dispositif étant configuré pour récupérer les informations d'un serveur via le réseau externe ;
dans lequel le choix du mode de fonctionnement du dispositif (100, 300, 400) est déterminé par l'orientation du dispositif (100, 300, 400).

2. Système selon la revendication 1, dans lequel le dispositif (100, 300, 400) est configuré pour agir comme un concentrateur sans fil permettant à plusieurs dispositifs utilisateurs de se connecter au dispositif (100, 300, 400) et d'obtenir les informations associées à la structure physique (101).

3. Système selon la revendication 1 ou 2, dans lequel le signal sans fil pour établir le canal de communication sans fil comprend un signal de balise, le signal de balise fournissant des données à utiliser par les un ou plusieurs dispositifs utilisateurs (105) pour se connecter au dispositif (100, 300, 400).

4. Système selon l'une quelconque des revendications précédentes, dans lequel le dispositif (100, 300, 400) est configuré pour transmettre les informations associées à la structure physique (101) sous la forme d'une page de contenu visible sur un ou plusieurs dispositifs utilisateurs.

5. Système selon la revendication 4, dans lequel la page de contenu comprend un lien vers une ou plusieurs autres pages de contenu disponibles pour être transmises de l'appareil (100, 300, 400) aux un ou plusieurs dispositifs utilisateurs (105).

6. Système selon l'une quelconque des revendications précédentes, comprenant une mémoire (201) pour stocker les informations associées à la structure physique (101).

7. Système selon l'une quelconque des revendications précédentes, dans lequel les informations se rapportent au site où se trouve la structure physique.

8. Système selon l'une quelconque des revendications précédentes, dans lequel le récepteur d'énergie sans fil (203) est configuré pour recevoir de l'énergie de la source externe (103) par couplage inductif avec la source externe (103).

9. Système selon l'une quelconque des revendications précédentes, dans lequel le canal de communication sans fil comprend un canal WiFi.

10. Système selon l'une quelconque des revendications précédentes, dans lequel le dispositif (100, 300, 400) est configuré pour recevoir des informations supplémentaires des un ou plusieurs dispositifs utilisateurs (105) via le canal de communication sans fil et pour stocker les informations supplémentaires en mémoire.

11. Système selon l'une quelconque des revendications précédentes, dans lequel le dispositif (100, 300, 400) est scellé dans un boîtier (209).

12. Système selon l'une quelconque des revendications précédentes, dans lequel le canal de communication est tel qu'il permette une communication bidirectionnelle entre le dispositif (100, 300, 400) et les un ou plusieurs dispositifs utilisateurs (105).

13. Système selon l'une quelconque des revendications précédentes, dans lequel la structure physique (101) comprend un monument.

14. Système selon la revendication 13, dans lequel le monument (101) commémore une personne ou un événement, et les informations associées au monument concernent la personne ou l'événement commémoré.

15. Système selon la revendication 14, dans lequel le monument (101) est une pierre tombale.
